# EUROPÄISCHE PATENTSCHRIFT

(11) **EP 0 573 856 B1**
(45) Veröffentlichungstag und Bekanntmachung des Hinweises auf die Patenterteilung: **14.10.1998**
(21) Anmeldenummer: 93108616.9
(22) Anmeldetag: 27.05.1993
(51) Int. Cl.: H04B 1/38, H04B 7/08

(54) **Funkgerät**
Radio transceiver
Radio-émetteur-récepteur

(30) Priorität: 12.06.1992 DE 4219350
(43) Veröffentlichungstag der Anmeldung: 15.12.1993
(73) Patentinhaber: SIEMENS AKTIENGESELLSCHAFT, 80333 München (DE)
(72) Erfinder: Koch, Georg, W-8044 Lohhof (DE)

(56) Entgegenhaltungen:
- EP-A- 0 124 319
- EP-A- 0 348 187
- EP-A- 0 419 674
- US-A- 4 286 335

## Beschreibung

Die Erfindung bezieht sich auf ein Funkgerät mit einem Sender/Empfänger, einer Steuereinrichtung sowie einer eingebauten Antenne und einer Schalteinrichtung zum Anschalten einer externen Antenne.

Tragbare Funkgeräte, z.B. Hand-Funktelefone besitzen im allgemeinen eine eingebaute Antenne. Eine Vergrößerung der Reichweite ergibt sich mit einer an das Funkgerät angeschlossenen externen Antenne. Diese ist bei einem Mobilfunkgerät beispielsweise an der Halterung angebracht. In einem Mobilfunkgerät mit eingebauter Antenne, an das auch eine externe Antenne angeschlossen werden kann, ist ein Antennenumschalter zu betätigen, sobald die externe Antenne mit dem HF-Sender/Empfänger verbunden bzw. von ihm getrennt wird. Das Verbinden bzw. Trennen kann beispielsweise in der Weise realisiert werden, daß entweder ein mechanischer HF-Schalter direkt durch das Einstecken des Funkgerätes in eine mit einem HF-Anschluß versehene Halterung bzw. das Anstecken des Antennenkabels betätigt wird oder ein elektrisches oder magnetisches Kriterium, z.B. ein Reedkontakt, den Antennenumschalter ansteuert bzw. der Steuerung des Funkgerätes das Vorhandensein einer externen Antenne meldet und diese dann ein entsprechendes Umschaltsignal an den Antennenumschalter abgibt.

Aus EP-A 0 348 187 ist ein Funkgerät bekannt, bei dem zur Auswahl einer Antenne zunächst die Empfangsqualität der ersten Antenne und dann die Empfangsqualität der zweiten Antenne ermittelt wird und die Ergebnisse miteinander verglichen werden.

Aus EP-A 0 124 319 ist eine Empfangseinrichtung bekannt, die zum Zweck der Antennenauswahl Meßwerte der Empfangsqualität abspeichert.

Der Erfindung liegt die Aufgabe zugrunde, eine einfache Lösung für eine Antennenumschaltung bei einem Funkgerät, das nach dem TDMA-Verfahren arbeitet anzugeben.

Diese Aufgabe wird gemäß Anspruch 1 gelöst.

Vorteilhafte Ausgestaltung und Weiterbildung des Erfindungsgegenstandes sind in den Unteransprüchen angegeben.

Nachstehend wird die Erfindung näher erläutert. Das Funkgerät ist dabei in bekannter Weise aufgebaut, bestehend aus einem Sender/Empfänger, einer Steuereinrichtung sowie einer eingebauten Antenne und einer Schalteinrichtung zum Anschalten einer externen Antenne. Die Schalteinrichtung besteht im wesentlichen aus einem von der Steuereinrichtung angesteuerten Umschalter zum wechselweisen Anschalten der eingebauten und der externen Antenne.

Nach dem Einschalten des Funkgerätes schaltet die Steuereinrichtung auf die eingebaute Antenne und scannt mit seinem Empfänger das Empfangsband ab, wobei sie die Empfangsqualität, z.B. Feldstärke und Jitter der relevanten Kanäle abspeichert. Anschließend wird auf die externe Antenne umgeschaltet und die Empfangsqualität aller oder einer Auswahl der vorher bereits vermessenen Kanäle vorgenommen. Diese Meßwerte werden ebenfalls abgespeichert. Durch den Vergleich der Meßwertpaare kann festgestellt werden, ob eine externe Antenne angeschlossen ist oder nicht. Liegen die Werte der externen Antenne besser als die der internen, so kann davon ausgegangen werden, daß eine externe Antenne angeschlossen ist. Während des Bereitschaftsbetriebes weraen diese Messungen in regelmäßigen Abständen wiederholt, damit ein Stecken in bzw. Ziehen aus der Halterung als solches erkannt wird und stets die richtige Antenne selektiert ist. Während eines Gespräches bleibt der Antennenumschalter so lange in seiner Stellung, bis die Qualität des Empfangssignals unter einen Mindestpegel abgefallen ist. Wird dieser Pegel unterschritten, so schaltet die Funkgerätesteuerung den Antennenumschalter um, um die Empfangsqualität mit der anderen Antenne zu beurteilen. Ist diese nach dem Umschalten besser, so läßt die Steuerung den Antennenumschalter in der neuen Stellung. Bei einer Verschlechterung schaltet die Steuereinrichtung den Antennenumschalter auf die alte Stellung zurück. Somit ist gewährleistet, daß auch während des Gespräches das Funkgerät der Halterung entnommen bzw. zurückgesteckt werden kann. Bei einem GSM- bzw. PCM-Gerät (TDMA-Verfahren) kann die Vergleichsmessung laufend ohne Beeinträchtigung der Empfangsqualität im Hintergrund während des Monitorzeitschlitzes stattfinden.

Der Vorteil der erfindungsgemäßen Ausgestaltung liegt zum einen darin, daß keine zusätzliche Hardware, wie elektrischer Kontakt, mechanischer Umschalter oder Reedkontakt mit Magnet notwendig ist, und zum anderen, daß auch eine fehlerhafte Installation (Antennedefekt oder nicht richtig angeschlossen) nicht zum völligen Ausfall des Funkgerätes führt, sondern in diesem Fall den Betrieb mit Hilfe der eingebauten Antenne ermöglicht.

## Patentansprüche

1. Verfahren zur Auswahl einer Antenne eines Funkgeräts mit einer eingebauten Antenne und einer externen Antenne, bei dem zunächst auf die eingebaute Antenne geschaltet, dann eine Umschaltung auf die externe Antenne vorgenommen wird, wobei in beiden Fällen die Empfangsqualität der entsprechenden Antenne ermittelt wird und ein Vergleich der Empfangsqualitäten vorgenommen wird,
**dadurch gekennzeichnet,** daß
die Empfangsqualität der eingebauten Antenne für mehrere Kanäle des Empfangsbandes durch den Empfänger ermittelt wird, die Empfangsqualität der externen Antenne für die vorher bereits vermessenen Kanäle des Empfangsbandes durch den Empfänger ermittelt wird,
die Ermittlung der Meßwerte der Empfangsqualitäten bei einem TDMA-Verfahren während eines Monitorzeitschlitzes durchgeführt wird, und
die entsprechenden Meßwerte von eingebauter und externer Antenne zur Auswahl der Antenne miteinander verglichen werden.

2. Verfahren nach Anspruch 1,
**dadurch gekennzeichnet,** daß
die Meßwerte der Empfangsqualität, z.B. Feldstärke, Jitter, für die relevanten Kanäle paarweise für die eingebaute und die externe Antenne abgespeichert werden.

3. Verfahren nach einem der vorhergehenden Ansprüche,
**dadurch gekennzeichnet,** daß
das Ergebnis des Meßwertvergleichs dahingehend bewertet wird, daß bei Vorliegen besserer Werte für die externe Antenne eine Anschaltung des Funkgerätes an die externe Antenne erfolgt.

4. Verfahren nach einem der vorhergehenden Ansprüche,
**dadurch gekennzeichnet,** daß
während des Bereitschaftsbetriebes eine regelmäßige Wiederholung der Messungen erfolgt.

5. Verfahren nach einem der vorhergehenden Ansprüche,
**dadurch gekennzeichnet,** daß
im Gesprächszustand der Antennenumschalter in seiner Stellung verbleibt bis zum Abfall der Qualität des Empfangssignals unter einen Mindestpegel.

## Claims

1. Method for selecting an antenna of a radio set having a built-in antenna and an external antenna, in which the built-in antenna is firstly switched to, then switching over to the external antenna is carried out, the reception quality of the corresponding antenna being determined in both cases, and comparison of the reception qualities being carried out, characterized in that the reception quality of the built-in antenna is determined by the receiver for a plurality of channels of the reception band, the reception quality of the external antenna is determined by the receiver for the already measured channels of the reception band, the determination of the measurements of the reception qualities is carried out in a TDMA process during a monitor time slot, and the corresponding measurements of the built-in and external antennas are compared with one another.

2. Method according to Claim 1, characterized in that the measurements of the reception quality, for example field strength, jitter, for the relevant channels are stored in pairs for the built-in and external antennas.

3. Method according to one of the preceding claims, characterized in that the result of the measurement comparison is assessed in such a way that, when there are better values for the external antenna, the radio set is connected to the external antenna.

4. Method according to one of the preceding claims, characterized in that regular repeating of the measurements takes place during standby operation.

5. Method according to one of the preceding claims, characterized in that, in communication mode, the antenna changeover switch remains at its setting until the quality of the received signal falls below a minimum level.

## Revendications

1. Procédé pour la sélection d'une antenne d'un radio-émetteur/récepteur équipé d'une antenne intégrée et d'une antenne externe, dans lequel on se commute d'abord sur l'antenne intégrée, on procède ensuite à une commutation sur l'antenne externe ; où dans les deux cas, on détermine la qualité de réception de l'antenne correspondante et on procède à une comparaison des qualités de réception,
**caractérisé en ce que**
la qualité de réception de l'antenne intégrée est déterminée par le récepteur pour plusieurs canaux de la bande de réception, et en ce que la qualité de réception de l'antenne externe est déterminée par le récepteur pour les canaux déjà mesurés au préalable ,
la détermination des valeurs mesurées des qualités de réception est effectuée lors d'un procédé TDMA pendant un créneau temporel du moniteur, et
les valeurs mesurées correspondantes de l'antenne intégrée et de l'antenne externe sont comparées les unes aux autres en vue de la sélection de l'antenne.

2. Procédé selon la revendication 1,
**caractérisé en ce que**
les valeurs mesurées de la qualité de réception, par exemple l'intensité de champ et l'instabilité pour les canaux en question, sont sauvegardées par paires pour l'antenne intégrée et l'antenne externe.

3. Procédé selon l'une des revendications précédentes,
**caractérisé en ce que**
le résultat de la comparaison entre les valeurs mesurées est évalué en ce sens qu'en présence de meilleures valeurs pour l'antenne externe, on procède à une connexion du radio-émetteur/récepteur à l'antenne externe.

4. Procédé selon l'une des revendications précédentes,
**caractérisé en ce que**
pendant le fonctionnement en attente, on procède à une répétition régulière des mesures.

5. Procédé selon l'une des revendications précédentes,
**caractérisé en ce que**
en situation d'appel, le commutateur d'antenne reste sur sa position jusqu'à ce que la qualité du signal de réception baisse en-deçà d'un niveau minimal.
